# EUROPÄISCHE PATENTANMELDUNG

(11) **EP 1 577 507 A1**
(43) Veröffentlichungstag der Anmeldung: **21.09.2005**
(21) Anmeldenummer: 04100815.2
(22) Anmeldetag: 01.03.2004
(51) Int. Cl.: F01K 13/00, F01K 23/06, F01K 23/16

(54) **Kraftanlage mit Kohlefeuerung**

(71) Anmelder: Alstom Technology Ltd, 5400 Baden (CH)
(72) Erfinder: Kreitmeier, Franz, 5400, Baden (CH)

(57) **Zusammenfassung**

Eine Kraftanlage weist einen konventionellen Dampfturbosatz, einen Hochtemperatur-Turbosatz und einen kohlegefeuerten Kessel (1) mit Wirbelschichtfeuerung auf. Der Hochtemperatur-Turbosatz ist insbesondere vertikal und parallel zum kohlegefeuerten Kessel (1) und separat vom konventionellen Turbosatz angeordnet. Überstromleitungen (4,5,6) sind vom Kessel (1) zu den Hochtemperatur-Turbinen über minimale Längen geführt. Die separate Anordnung der beiden Turbosätze und die vertikale Anordnung des Hochtemperatur-Turbosatzes erbringt Vorteile bezüglich Wirkungsgrad sowie Herstellung und Wartung der Anlage.

## Beschreibung

### Technisches Gebiet

Die Erfindung betrifft eine kohlegefeuerte Kraftanlage mit HochtemperaturDampfprozess.

### Stand der Technik

Die Erzeugung von elektrischer Energie mittels kohlegefeuerter Kraftwerke wird bezüglich der Umweltverträglichkeit der Kohleverbrennung und Erhöhung der Wirkungsgrade der Anlagen stets verbessert. In dem Bericht "Dampfturbinen auf Rekordkurs" der Fachzeitschrift Energie, Jahrgang 47, Nr. 1-2, Jan./Feb. 1995 werden kohlegefeuerte Kraftwerke mit Hochtemperaturdampfturbinen beschrieben, mit denen erhöhte Wirkungsgrade erreicht werden. Durch den Einsatz von neuen hochtemperaturbeständigen Materialien, wie zum Beispiel zehnprozentigem Chromstahl, können die Turbinen Frischdampftemperaturen von bis zu 580°C und Frischdampfdrücken von bis zu 270 bar betrieben werden. Der erwähnte Hochtemperaturdampfprozess eignet sich auch für die Verwendung von Kohlevergasung und die Kombination von Gas- und Dampfkraftwerken unter Einsatz von druckaufgeladener Wirbelschichtfeuerung.

In der WO 02/084080 Ist ein Dampfkraftwerk mit erhöhtem Wirkungsgrad beschrieben mit einem nachgerüsteten Hochtemperatur-Turbosatz, der auf einem separaten Rotor angeordnet ist, wobei der separate Rotor entweder mit dem bestehenden Rotor gekoppelt oder von ihm entkoppelt ist. Für den Hochtemperatur-Turbosatz werden Bauteile aus Stahl oder Nickel-Basis Materialien eingesetzt, was einen Betrieb des Turbosatzes mit Frischdampf von bis zu 720°C und bis zu 375 bar. Die erhöhte Frischdampftemperatur im Kessel wird zum Beispiel durch eine Modifikation des Überhitzers oder die Nachschaltung eines weiteren Überhitzers realisiert.

In "Modern Power Systems", April 1997, S. 33 ff wird ein kohlegefeuertes Kraftwerk beschrieben, welches einen Kessel mit druck geladener Wirbelschichtfeuerung, auch unter dem Begriff "pressurized fluidized bed combustion boiler (PFBC)" bekannt, aufweist. Dieser Kessel liefert Frischdampf für eine Hochdruckdampfturbine sowie wiedererhitzten Dampf für eine Mitteldruckdampfturbine und Hochdruckabgas für eine Gasturbine.

### Darstellung der Erfindung

Es ist der vorliegenden Erfindung die Aufgabe gestellt, eine kohlegefeuerte Kraftanlage mit Hochtemperatur-Dampfturbinen anzugeben, die kostengünstig herzustellen ist und die ein gutes transientes Verhalten des Kessels, der Dampfturbine und der Überströmleitungen zwischen Kessel und Turbine aufweist.

Diese Aufgabe wird durch Kraftanlagen gemäss den Ansprüchen 1 und 2 gelöst. Besondere und/oder bevorzugte Ausführungen dieser Kraftanlagen sind in den Unteransprüchen angegeben.

Eine erste Kraftanlage weist mindestens einen Hochtemperatur-Turbosatz und mindestens einen konventionellen Dampfturbosatz, sowie einen kohlegefeuerten Kessel und eine Kondensations- und Speisewasservorwärmeranlage auf. Gemäss der Erfindung ist der Hochtemperatur-Turbosatz, umfassend einen ersten Generator und auf einem ersten Rotor angeordnet, vertikal und parallel zum Kessel angeordnet, und der konventionelle Dampfturbosatz, umfassend einen zweiten Generator und auf einem zweiten Rotor angeordnet, ist separat vom Hochtemperatur-Turbosatz angeordnet.
Der konventionelle Dampfturbosatz umfasst Dampfturbinen, deren Bauteile ausschliesslich aus Stahl gefertigt sind und die bei Dampftemperaturen von typischerweise bis zu 560°C, eventuell bis 600 oder 620°C betrieben werden.

Diese erste Kraftanlage gemäss der Erfindung ist als Neuanlage ausführbar.

Eine zweite Kraftanlage gemäss der Erfindung ist als Anlage mit einem Nachrüstsatz oder Retrofit ausführbar, der in eine bestehende Kraftanlage eingebaut wird.

Die zweite Kraftanlage weist einen Dampferzeuger, einen konventionellen Turbosatz mit Hoch-, Mittel- und Niederdruckdampfturbine sowie eine Kondensations- und Speisewasservorwärmeranlage und insbesondere einen Nachrüstsatz auf. Der Nachrüstsatz weist einen kohlegefeuerten Kessel und einen Hochtemperatur-Turbosatz auf, der vertikal und parallel zum kohlegefeuerten Druckkessel und separat vom konventionellen Turbosatz angeordnet ist.

In einer ersten bevorzugten Ausführung der ersten sowie zweiten Kraftanlage weist der Hochtemperatur-Turbosatz eine Hochtemperatur-Hochdruckdampfturbine, eine Hochtemperatur-Mitteldruckdampfturbine und eine Hochdruckgasturbine auf, die einen Hochdruckverdichter und einen Generator antreiben. Beide Hochtemperaturdampfturbinen werden mit Frischdampf aus dem kohlegefeuerten Kessel betrieben, wobei Überströmleitungen mit minimaler Länge vom Kessel zu diesen Turbinen führen. Der Frischdampf für die Hochtemperatur-Hochdruckturbine besitzt eine Temperatur in einem Bereich von bis zu 800° und einen Druck in einem Bereich von bis zu 425 bar, der Dampf für die Hochtemperatur-Mitteldruckturbine eine Temperatur in einem Bereich von bis zu 820°C und einen Druck in einem Bereich von bis zu 70 bar. Der Austritt der Hochtemperatur-Hochdruckdampfturbine ist mittels einer Dampfüberströmleitung mit dem Eintritt der konventionellen Hochdruckturbine verbunden, und der Austritt der Hochtemperatur-Mitteldruckdampfturbine ist mittels einer weiteren Dampfüberströmleitung mit dem Eintritt zur konventionellen Mitteldruckturbine verbunden.

Die Hochdruckgasturbine wird mit Rauchgas aus dem kohlegefeuerten Kessel betrieben. Hierzu führt eine Überströmleitung mit minimaler Länge vom Kessel zur Hochdruckgasturbine. Das Rauchgas besitzt beispielsweise eine Temperatur von 850°C und einen Druck von 13 bar.

In einer weiteren bevorzugten Ausführung der ersten und zweiten Kraftanlagen sind der Austritt der Hochtemperatur-Mitteldruckdampfturbine und der Austritt der Hochtemperatur-Hochdruckdampfturbine jeweils mittels Überströmleitungen mit dem Eintritt der konventionellen Hochdruckdampfturbine bzw. dem Eintritt der konventionellen Mitteldruckdampfturbine verbunden.

In einer weiteren bevorzugten Ausführung der ersten und zweiten Kraftanlage ist in Erweiterung der ersten Ausführung der Hochdruckgasturbine eine Brennkammer vorangeschaltet, zu der einerseits eine Leitung für Abgas aus dem kohlegefeuerten Kessel und anderseits eine Leitung für Synthesegas aus einem Kohlevergaser führen. Dies erlaubt den Betrieb der Hochdruckgasturbine mit Heissgas von einer Temperatur in einem Bereich von bis zu 1200 °C und einem Druck von bis zu 30 bar, was einen höheren thermischen Wirkungsgrad ergibt.

Der Kohlevergaser ist insbesondere zur Erzeugung von Synthesegas nur für die Brennkammer ausgelegt. Die damit realisierte, sogenannte partielle Kohlevergasung hat den Vorteil, dass der Kraftwerkswirkungsgrad im Vergleich zu einer integrierten Kohlevergasung einen höheren Wert erzielt.

In allen Ausführungen der ersten und zweiten Kraftanlage ist der Kessel, der das Arbeitsmedium für den Hochtemperatur-Turbosatz liefert vorzugsweise ein Druckkessel mit stationärer Wirbelschichtfeuerung oder sogenannter "pressurized fluidized bed combustor". Dieser Kessel hat den Vorteil, dass er aufgrund des Betriebsdrucks kleinere Wärmeübertragungsflächen erfordert, was eine bedeutende Verminderung der Apparatgrösse sowie auch der Herstellungskosten erbringt.
In einer Variante ist der Kessel ein Druckkessel mit zirkulierender Wirbelschichtfeuerung (pressurized circulating fluidized bed combustor).
In einer weiteren Variante wird ein atmosphärischer Kessel eingesetzt. Da diese prinzipiell eine sehr viel grössere Wärmeaustauschfläche im Kessel erfordert, ist dies dann realisierbar falls ein guter Wärmeübergang an den Heizflächen vorhanden ist.

In sämtlichen Ausführungen der Erfindung führt von der Hochdruckgasturbine eine Leitung zu einer Niederdruckgasturbine, die auf einem separaten Rotor angeordnet ist und einen Niederdruck-Kompressor antreibt. Insbesondere ist die Niederdruckgasturbine mittels einer verstellbaren Leitreihe regelbar. Dadurch lässt sich die Drehzahl dieses Turbosatzes und damit auch der Massenstrom variieren.

In sämtlichen Ausführungen der Erfindung sind der Niederdruckgasturbine eine Entstickungsanlage und mehrere mit Rauchgas beheizte Speisewasservorwärmer zur Verwertung der in den Abgasen der Gasturbinen enthaltenen Energie nachgeschaltet. Hierzu sind sie wasserseitig mit der Speisewasservorwärmanlage der Kraftanlage geschaltet.

Die vertikale Anordnung des Hochtemperatur-Turbosatzes erbringt Vorteile bezüglich Wirkungsgrad der Kraftanlage und der Herstellung und Wartung der Turbinen und der Überströmleitungen. Sie erlaubt den Bau der Hochtemperatur-Turbinen in Topfbauweise, welche einen Gehäusebau in zwei Hälften mit Verflanschungen vermeidet. Bei vertikaler Bauweise sind die Turbinen auch relativ wartungsfreundlich, da sie einfacher geöffnet werden können.
Die Hochtemperatur-Dampfturbinen sind kleiner dimensioniert als die konventionellen Dampfturbinen, die mit Frischdampf von bis zu 560°C betrieben werden. Die Anordnung der Hochtemperatur-Dampfturbinen nahe dem Kessel auf einem separaten Rotor, getrennt von den konventionellen Dampfturbinen, erlaubt eine kompakte Bauweise der Hochtemperaturturbinen. So sind zum Beispiel ein relativ kleiner Rotordurchmesser und ein vorteilhafteres Verhältnis von Rotordurchmesser zu Schaufellänge möglich, wodurch ein erhöhter Wirkungsgrad aufgrund von besseren Strömungsbedingungen erreicht werden kann. Die vertikale Anordnung des Rotors hat den weiteren Vorteil, dass die Wellendynamik einfacher beherrscht werden kann.
Die vertikal und zum Kessel parallele Anordnung der Hochtemperatur-Dampfturbinen ermöglicht insbesondere die Führung der Überströmleitungen vom Kessel zu den Turbinen über relativ kurze Längen gegenüber den Überströmleitungen, die bei einer horizontalen Anordnung der Turbinen notwendig wären. Da die Überströmleitungen aus teuren Ni-Basis Materialien oder anderem Hochtemperaturbeständigem Material gefertigt werden müssen, ergeben sich hier bedeutende Kostenersparnisse in der Herstellung.

Das transiente Verhalten des Kessels, der Hochtemperatur-Dampfturbinen und Überströmleitungen wird durch diese Anlagenanordnung begünstigt. Der hohe Druck im Kessel erlaubt kleinere Abmessungen seiner Bauteile und führt zu einem verbesserten transienten Verhalten der Bauteile. Der Kessel kann beispielsweise schneller auf Vollast gebracht werden und ist allgemein schneller reagierend auf Betriebsänderungen.

### Kurze Beschreibung der Zeichnungen

Es zeigen
Figur 1 eine erste bevorzugte kohlegefeuerten Kraftanlage gemäss der Erfindung als Neuanlage ausgeführt,
Figur 2 eine zweite kohlegefeuerten Kraftanlage gemäss der Erfindung als Neuanlage ausgeführt,
Figur 3 eine kohlegefeuerte Kraftanlage gemäss der Erfindung als Anlage mit Nachrüstsatz ausgeführt,
Figur 4 der Anlagenteil IV der Kraftanlagen von Figur 1, 2 und 3.

### Ausführung der Erfindung

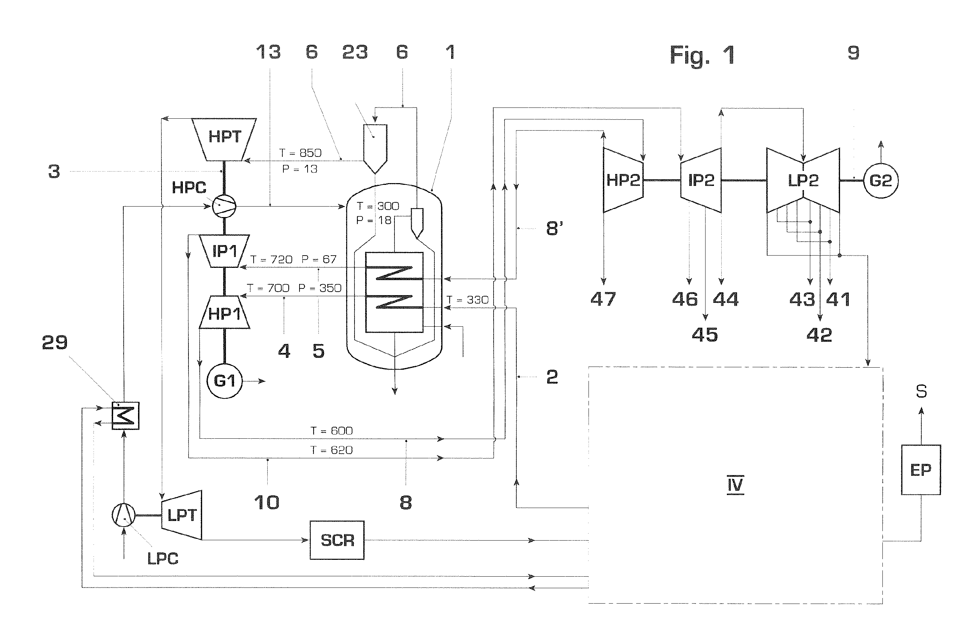

Figur 1 zeigt eine erste kohlegefeuerte Kraftanlage gemäss der Erfindung mit Hochtemperatur-Turbosatz, die als gesamte Neuanlage realisierbar ist. Sie weist einen kohlegefeuerten Druckkessel 1 auf, insbesondere mit Wirbelschichtfeuerung, zu dem eine Speisewasserleitung 2 und eine Dampfleitung 8' führen. Kessel 1 umfasst unter anderem einen Verdampfer und Überhitzer zur Erhitzung von Dampf bei hohem Druck. Überströmleitungen 4 und 5 führen vom Kessel 1 zu einer Hochtemperatur-Hochdruckdampfturbine HP1 und einer Hochtemperatur-Mitteldruckdampfturbine IP1. Eine weitere Überströmleitung 6 führt Abgas vom Kessel 1 zu einer Hochdruckgasturbine HPT. Die drei Turbinen HPT, HP1 und IP1 bilden zusammen mit einem Hochdruck-Kompressor HPC und einem Generator G1 auf dem Rotor 3 einen Turbosatz, der vertikal und parallel zum Kessel 1 angeordnet ist.
Die Hochtemperatur-Dampfturbinen und Hochdruckgasturbine HPT sind für den Betrieb bei hohen Temperaturen und hohen Drücken ausgelegt, indem ihre Bauteile aus Nickel-Basis-Materialien gefertigt sind. Die Überströmleitungen 4,5 und 6 sind ebenfalls aus Nickel-Basis Materialien gefertigt.

Diese Leitungen 4, 5 und 6 werden dank der vertikalen und zum Kessel parallelen Anordnung der Turbinen mit minimaler Länge geführt. Ihre minimale Länge erbringt angesichts der hohen Kosten der Nickel-Basis-Materialien eine bedeutende Kostenersparnis.

Speisewasser wird über Leitung 2 mit einer Eingangstemperatur von beispielsweise 330°C in den Kessel 1 geleitet und dort im Verdampfer und Überhitzer auf eine Temperatur von beispielsweise 700°C bei einem Druck von 350 bar erhitzt. Bei Verwendung von Nickel-Basis-Materialien in den Hochtemperatur-Bauteilen des Turbosatzes sind auch Dampftemperaturen von bis zu 820°C und Drücken von bis zu 425 bar erreichbar.

Vom Kessel gelangt der überhitzte Dampf über die erste Überströmleitung 4 zur Hochtemperatur-Hochdruckdampfturbine HP1, in welcher der Dampf expandiert wird. Der expandierte Dampf, der beispielsweise noch eine Temperatur von 600°C besitzt, wird sodann über eine Leitung 8 einer konventionellen Hochdruckdampfturbine HP2 zugeleitet. Diese bildet, zusammen mit einer konventionellen Mitteldruckdampfturbine IP2, einer konventionellen Niederdruckdampfturbine LP2 und einem zweiten Generator G2 auf einem zweiten Rotor 9 einen konventionellen Turbosatz angeordnet.

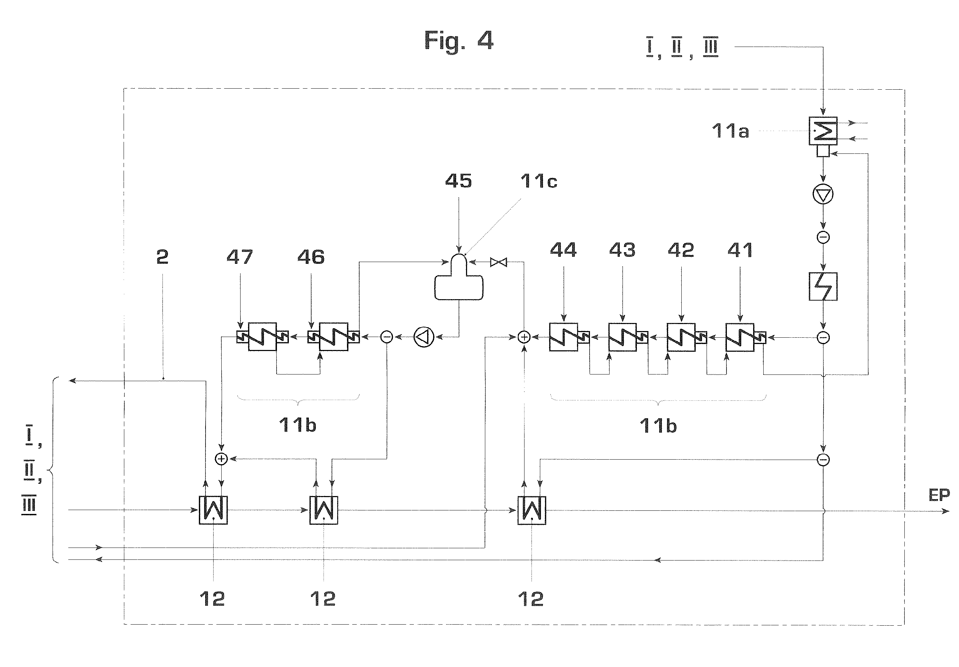

Der in der konventionellen Hochdruckdampfturbine HP2 expandierte Dampf wird über eine Leitung 8' in den Kessel 1 zurückgeführt, wo er in einem Zwischenüberhitzer auf beispielsweise 720°C bei einem Druck von ca. 67 bar wieder erhitzt wird. Dieser wiedererhitzte Dampf wird über eine kurze Leitung 5 in die Hochtemperatur-Mitteldruckdampfturbine IP1 geleitet. Der in IP1 expandierte Dampf wird über eine Leitung 10 in konventionelle Mitteldruckdampfturbine IP2 geleitet und dort weiter expandiert und in der nachgeschalteten Niederdruckdampfturbine LP2 vollständig entspannt. Der Dampf wird schliesslich einer Kondensations- und Speisewasservorwärmeranlage zugeführt, die in Figur 4 dargestellt ist.
Die Leitung 6 führt Abgas von einer Temperatur von beispielsweise 850°C vom Kessel 1 über einen Hochtemperatur-Filter 23 in die Hochdruckgasturbine HPT, in der es expandiert wird. Das expandierte Gas wird sodann zu einer nachgeschalteten, auf einem separaten Rotor angeordneten und regelbaren Niederdruckgasturbine LPT geführt. Das dort vollständig entspannte Gas wird einer Entstickungsanlage SCR zwecks Reduktion der Stickoxide und danach einer Serie von rauchgasbeheizten Speisewasservorwärmern 12 zugeführt, die in Figur 4 dargestellt sind. Die Speisewasservorwärmer sind wasserseitig mit dem Speisewasservorwärmanlage geschaltet. Den Speisewasservorwärmern 12 sind ein Elektrofilter EP und ein Kamin S nachgeschaltet.

Figur 4 stellt eine konventionelle Kondensationsanlage sowie eine konventionelle Speisewasservorwärmanlage dar. Sie umfasst einen Kondensator 11a, einen Speisewasserbehälter 11 c und Speisewasservorwärmer 11 b, die durch Anzapfdampf aus den konventionellen Dampfturbinen über Leitungen 41-47 beheizt sind, sowie den rauchgasbeheizten Speisewasservorwärmern 12, die den Gasturbinen nachgeschaltet sind. Die Speisewasservorwärmanlage ist über die Leitung 2 mit dem Kessel 1 verbunden, wodurch der Wasser-Dampf-Kreislauf geschlossen ist.

In Figur 1 sind ein Niederdruckkompressor LPC und ein Hochdruckkompressor HPC dargestellt, die durch die Niederdruckgasturbine LPT bzw. durch die Hochtemperatur-Turbinen HPT, HP1 und IP1 angetrieben sind. Der Niederdruckkompressor bildet zusammen mit der Niederdruckturbine LPT einen weiteren, separaten Turbosatz. Zwischen den beiden Kompressoren ist ein Wärmetauscher 29 zur Kühlung der zu komprimierenden Luft geschaltet. Vom Hochdruckkompressor führt eine Leitung 13 für die komprimierte Luft zum Kessel 1. Sie führt Luft von beispielsweise 300°C und 18 bar in den Kessel.

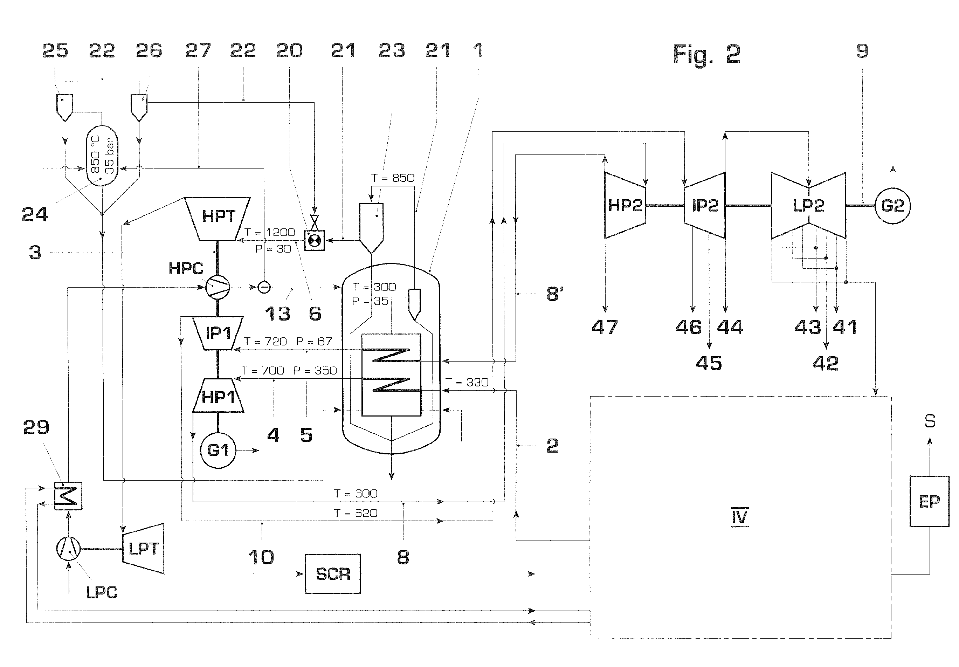

Figur 2 stellt die erste kohlegefeuerte Kraftanlage gemäss der Erfindung als Neuanlage dar. Sie weist sämtliche Bauteile auf, die auch in der Anlage gemäss Figur 1 vorhanden sind. Zusätzlich weist sie eine Brennkammer 20 auf, die unmittelbar der Hochdruckgasturbine HPT vorgeschaltet ist. Eine Abgasleitung 21 und eine Synthesegasleitung 22 führen zur Brennkammer 20. Die erste Leitung 21 führt das Abgas des Kessels 1 durch einen Hochtemperatur-Zyklon und einen Hochtemperatur-Filter 23 und zur Brennkammer 20. Das Gas besitzt dort noch eine Temperatur von beispielsweise 850°C und einen Druck von 13 bar, wobei diese Temperatur durch den Ascheschmelzpunkt gegeben ist. Die Synthesegasleitung 22 führt Synthesegas von einem Kohlevergaser 24 über einen Zyklon 25 und einen Filter 26 zur Brennkammer 20. Der Kohlevergaser erzeugt nur soviel Brennstoff wie die Brennkammer benötigt (partielle Vergasung). Eine Leitung 27 führt ferner vom Hochdruckkompressor HPC zum Kohlevergaser 24 zwecks Versorgung des Vergasers mit erhitzter Druckluft.

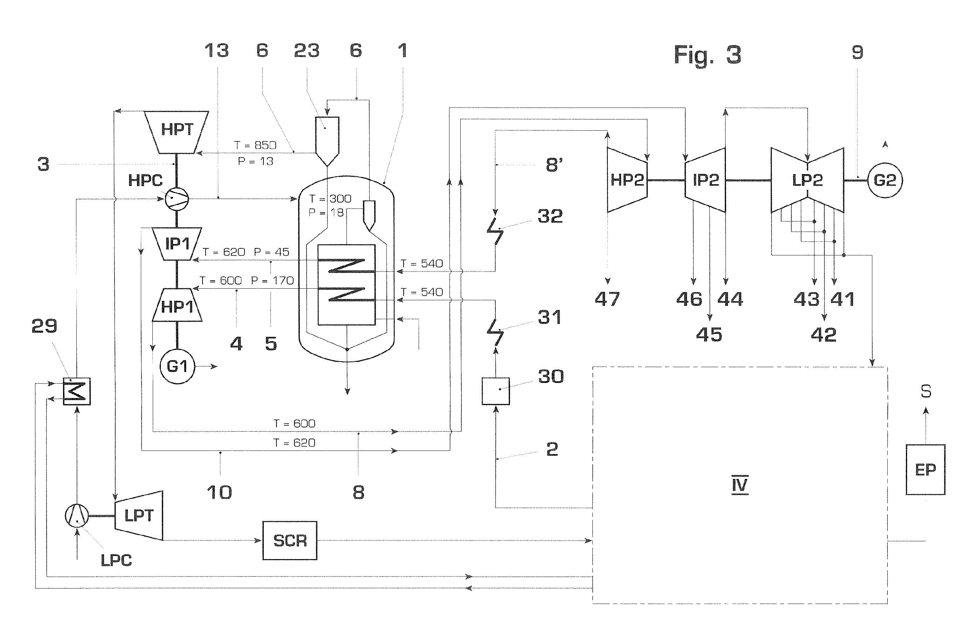

Figur 3 stellt die zweite kohlegefeuerte Kraftanlage gemäss der Erfindung als Anlage mit Nachrüstsatz dar.
Der konventionelle Dampfturbosatz weist wiederum eine Hochdruckdampfturbine HP2, eine Mitteldruckdampfturbine IP2 und eine Niederdruckdampfturbine LP2 auf, die auf einem Rotor 9 einen Generator G2 antreiben. Die Kraftanlage weist eine in IV dargestellte Speisewasservorwärmanlage auf. Aus der Speisewasservorwärmanlage führt eine Leitung 2 zu einem Kessel, zum Beispiel einem kohlegefeuerten Kessel, der einen Verdampfer 30 und einen Überhitzer 31. Ferner ist in der aus der Hochdruckdampturbine HP2 führenden Leitung 8' ein Zwischenüberhitzer 32 geschaltet.

Der Nachrüstsatz gemäss der Erfindung in Figur 3 weist vorzugsweise einen kohlegefeuerten Druckkessel 1 mit stationärer Wirbelschichtfeuerung oder zirkulierender Wirbelschichtfeuerung auf mit Überhitzer und Zwischenüberhitzer, die den Überhitzer 31 bzw. dem Zwischenüberhitzer 32 nachgeschaltet sin. Der Nachrüstsatz weist Hochtemperatur-Turbinen HPT, HP1 und IP1 und Hochtemperatur-Kompressor HPC auf, die parallel zum Kessel 1 und vertikal auf Rotor 3 angeordnet sind und einen Generator G1 antreiben. Gleichsam wie in der ersten Kraftanlage der Erfindung als Neuanlage sind kurze Überströmleitungen 4, 5, 6 vom Kessel 1 zu den einzelnen Turbinen geführt zwecks Leitung von Hochtemperaturdampf bzw. Gas.
Ferner umfasst der Nachrüstsatz einen Niederdruckkompressor LPC, der durch eine Niederdruckgasturbine LPT angetrieben wird. Der Niederdruckgasturbine LPT sind wiederum eine Entstickungsanlage SCR und ein rauchgasbeheizter Speisewasservorwärmer 12 nachgeschaltet, die mit den Apparaten 11a, 11b und 11 c der Speisewasservorwärmanlage geschaltet sind. Den Speisewasservorwärmern 12 sind wiederum ein Elektrofilter EP und der Kamin S nachgeschaltet.
Die nachgerüstete Kraftanlage wird beispielsweise nach folgender Weise betrieben. Dampf, der im ursprünglich bestehenden Kessel mit Verdampfer 30 erzeugt worden ist, wird durch den Überhitzer 31 geleitet und bei einer Temperatur von beispielsweise 540°C in den kohlegefeuerten Kessel mit Wirbelschichtfeuerung 1 geleitet, wo er in einem zweiten Überhitzer weiter erhitzt wird.
Der zum Beispiel auf 600°C bei einem unveränderten Druck von 170 bar erhitzte Dampf wird über die Überströmleitung 4 zur Hochtemperatur-Hochdruckdampfturbine HP1 geleitet und dort expandiert. Der expandierte Dampf wird sodann über die Leitung 8 zur konventionellen Hochdruckdampfturbine HP2 geleitet. Der dort expandierte Dampf wird durch einen Zwischenüberhitzer 32 geleitet und dem Druckkessel 1 zugeführt, wo er durch einen zweiten Überhitzer geführt wird.

Nach einer Überhitzung auf 620°C bei einem Druck von 45 bar wird der Dampf über die Leitung 5 zur Hochtemperatur-Mitteldruckdampfturbine IP1 geleitet. Der dort expandierte Dampf wird über Leitung 10 der konventionellen Mitteldruckturbine IP2 und schliesslich in der konventionellen Niederdruckturbine LP2 vollständig entspannt.
Abgase aus dem Kessel 1 werden, ähnlich wie in den anderen Ausführungen der Erfindung über die Leitung 6 und über einen Filter in die Hochdruckgasturbine HPT geleitet. Das dort expandierte Gas wird sodann der Niederdruckgasturbine LPT zugeleitet.

### Bezugszeichenliste

- 1: Druckkessel mit Wirbelschichtfeuerung
- 2: Speisewasserleitung
- 3: Rotor, vertikal angeordnet, für Gas-/Dampfturbosatz
- 4: Überströmleitung zur Hochdruck-Hochtemperaturdampfturbine HP1
- 5: Überströmleitung zu Mitteldruck-Hochtemperaturdampfturbine IP1
- 6: Überströmleitung zur Hochdruckgasturbine HPT
- 8: Leitung zu konventioneller Hochdruckdampfturbine HP2
- 8': Rückführleitung zu Kessel
- 9: Rotor, horizontal angeordnet, für konventionellen Dampfturbosatz
- 10: Überströmleitung zu Mitteldruckturbine IP2
- 11: Kondensations- und Vorwärmanlage
- 11a: Kondensator
- 11b: Speisewasservorwärmer, beheizt durch Anzapfdampf
- 11c: Speisewasserbehälter
- 12: Speisewasservorwärmer rauchgas beheizt
- 13: Überströmleitung für Verbrennungsluft
- 20: Brennkammer
- 21: Leitung für Rauchgas aus Kessel
- 22: Leitung für Synthesegas
- 23: Hochtemperatur-Filter
- 24: Kohlevergaser
- 25: Hochtemperatur-Zyklon
- 26: Hochtemperatur-Filter
- 27: Leitung für Druckluft
- 29: Wärmetauscher
- 30: Verdampfer
- 31: Überhitzer
- 32: Zwischenüberhitzer
- HPT: Hochtemperatur-Hochdruckgasturbine
- LPT: Hochtemperatur-Niederdruckgasturbine
- HP1: Hochtemperatur-Hochdruckdampfturbine
- IP1: Hochtemperatur-Mitteldruckdampfturbine
- HP2: Hochdruckdampfturbine
- IP2: Mitteldruckdampfturbine
- LP2: Niederdruckdampfturbine
- G1, G2: Generator
- LPC: Niederdruckkompressor
- HPC: Hochdruckkompressor
- SCR: Entstickungsanlage
- EP: Elektrofilter
- S: Kamin

## Patentansprüche

1. Kraftanlage mit mindestens einem Hochtemperatur-Turbosatz und mindestens einem konventionellen Turbosatz, einem kohlegefeuerten Kessel (1) und einer Kondensations- und Speisewasservorwärmeranlage (11)
**dadurch gekennzeichnet, dass**
der Hochtemperatur-Turbosatz vertikal und parallel zum kohlegefeuerten Kessel (1) angeordnet ist und der konventionelle Turbosatz separat vom Hochtemperatur-Turbosatz angeordnet ist.

2. Kraftanlage mit mindestens einem konventionellen Turbosatz und einem Kessel, einer Kondensations- und Speisewasservorwärmanlage (11) und einem Nachrüstsatz
**dadurch gekennzeichnet, dass**
der Nachrüstsatz einen kohlegefeuerten Kessel (1) und einen Hochtemperatur-Turbosatz aufweist und der Hochtemperatur-Turbosatz vertikal und parallel zum kohlegefeuerten Kessel (1) und separat vom konventionellen Turbosatz angeordnet ist.

3. Kraftanlage nach Anspruch 1 oder 2
**dadurch gekennzeichnet, dass**
der Hochtemperatur-Turbosatz eine Hochtemperatur-Hochdruckdampfturbine (HP1), eine Hochtemperatur-Mitteldruckdampfturbine (IP1) und eine Hochdruckgasturbine (HPT) aufweist, und die Kraftanlage eine erste Überströmleitung (4), die vom kohlegefeuerten Kessel (1) zur Hochtemperatur-Hochdruckdampfturbine (HP1) führt, und eine zweite Überströmleitung (5) aufweist, die vom kohlegefeuerten Kessel (1) zur Hochtemperatur-Mitteldruckdampfturbine (IP1) führt, wobei die erste und zweite Überströmleitung (4,5) mit minimaler Länge geführt sind.

4. Kraftanlage nach Anspruch 1 oder 2
**dadurch gekennzeichnet, dass**
die Kraftanlage eine dritte Überströmleitung (6) aufweist, die vom Kessel (1) zur Hochdruckgasturbine (HPT) zwecks Leitung von Rauchgas aus dem Kessel (1) führt, und die dritte Überströmleitung (6) mit minimaler Länge geführt ist.

5. Kraftanlage nach Anspruch 1 oder 2
**dadurch gekennzeichnet,**
**dass** der kohlegefeuerte Kessel (1) ein Druckkessel mit stationärer Wirbelschichtfeuerung, oder ein Druckkessel mit zirkulierender Wirbelschichtfeuerung oder ein atmosphärischer Kessel ist.

6. Kraftanlage nach Anspruch 1 oder 2
**dadurch gekennzeichnet, dass**
Frischdampf für die Hochtemperatur-Hochdruckturbine (HP1) eine Temperatur in einem Bereich von bis zu 820° und einen Druck in einem Bereich von bis zu 425 bar besitzt, und der Dampf für die Hochtemperatur-Mitteldruckturbine (IP1) eine Temperatur in einem Bereich von bis zu 820°C und einen Druck in einem Bereich von bis zu 70 bar besitzt.

7. Kraftanlage nach Anspruch 1 oder 2
**dadurch gekennzeichnet, dass**
der konventionelle Turbosatz eine Hochdruckdampfturbine (HP2), eine Mitteldruckdampfturbine (IP2) und eine Niederdruckdampfturbine (LP2) aufweist, und eine erste Dampfüberströmleitung (8) vom Austritt der Hochtemperatur-Hochdruckdampfturbine (HP1) zum Eintritt der konventionellen Hochdruckturbine (HP2) führt und eine zweite Dampfüberströmleitung (10) vom Austritt der Hochtemperatur-Mitteldruckdampfturbine (IP1) zum Eintritt der konventionellen Mitteldruckturbine (IP2) führt.

8. Kraftanlage nach einem der vorangehenden Ansprüche
**dadurch gekennzeichnet, dass**
der Hochdruckgasturbine (HPT) eine Brennkammer (20) vorgeschaltet ist.

9. Kraftanlage nach Anspruch 8
**dadurch gekennzeichnet, dass**
eine erste Gaszufuhrleitung (21) für Rauchgas aus dem kohlegefeuerten Kessel (1) zur Brennkammer (20) führt, und eine zweite Leitung (22) zur Leitung von Synthesegas aus einem Kohlevergaser (24) zur Brennkammer (20) führt.

10. Kraftanlage nach Anspruch 9
**dadurch gekennzeichnet, dass**
der Kohlevergaser (24) nur für die Versorgung der Brennkammer (20) ausgelegt ist.

11. Kraftanlage nach einem der vorangehenden Ansprüche 3-10
**dadurch gekennzeichnet, dass**
eine Überströmleitung vom Austritt der Hochtemperatur-Hochdruckgasturbine (HPT) zu einer Niederdruckgasturbine (LPT) führt, die auf einem separaten Rotor zum Antrieb eines Niederdruck-Kompressors (LPC) angeordnet ist.

12. Kraftanlage nach Anspruch 11
**dadurch gekennzeichnet, dass**
der Niederdruckgasturbine (LPT) eine Entstickungsanlage (SCR) und ein oder mehrere Speisewasservorwärmer (12) nachgeschaltet sind, die durch Rauchgas aus den Gasturbinen beheizt sind und wasserseitig mit der Kondensations- und Speisewasservorwärmeranlage (11) geschaltet sind.

13. Kraftanlage nach einem der vorangehenden Ansprüche
**dadurch gekennzeichnet, dass**
der Hochtemperatur-Turbosatz einen Hochdruckkompressor (HPC) umfasst und vom Hochdruckkompressor (HPC) eine Leitung (13) zur Leitung von Druckluft in den Kessel (1) führt.

14. Kraftanlage nach Anspruch 13
**dadurch gekennzeichnet, dass**
vom Hochdruckkompressor (HPC) eine Leitung (27) zum Kohlevergaser (24) führt.
